# FASCICULE DE BREVET EUROPEEN

(11) **EP 0 846 506 B1**
(45) Date de publication et mention de la délivrance du brevet: **05.01.2005**
(21) Numéro de dépôt: 97402566.0
(22) Date de dépôt: 29.10.1997
(51) Int. Cl.: B22C 3/00, B22D 11/06

(54) **Enduit protecteur pour éléments en matériau réfractaire d'une lingotiére de coulée continue des métaux, et élement en matériau réfractaire protégé à l'aide de cet enduit**
Schützüberzug für Elementen einer Stranggiesskokille aus feuerfestem Material und vorgenannten Elementen
Protective coating for elements of continuous casting moulds and said elements being made out of refractory material and coated with such protective coating

(30) Priorité: 06.11.1996 FR 9613468
(43) Date de publication de la demande: 10.06.1998
(73) Titulaire: USINOR, 92800 Puteaux (FR); Thyssen Stahl Aktiengesellschaft, 47166 Duisburg (DE)
(72) Inventeur: Crisci, Jean-Pierre, 38130 Echirolles (FR); Ganser, Christophe, 62400 Bethuné (FR); Damasse, Jean-Michel, 62330 Isbergues (FR); Schmitz, Wilhelm, 52499 Baesweiler (DE); Senk, Dieter, 47169 Duisburg (DE); Stebner, Guido, 47509 Rheurdt (DE)
(74) Mandataire: Neyret, Daniel

(56) Documents cités:
- WO-A-96/00626
- US-A- 2 726 160
- US-A- 4 003 867
- US-A- 5 325 907
- PATENT ABSTRACTS OF JAPAN vol. 014, no. 334 (C-0742), 18 juillet 1990 & JP 02 120397 A (KAWASAKI STEEL CORP), 8 mai 1990,
- PATENT ABSTRACTS OF JAPAN vol. 016, no. 083 (M-1216), 28 février 1992 & JP 03 268849 A (AKECHI CERAMICS KK), 29 novembre 1991,

## Description

L'invention concerne la coulée continue des métaux, notamment de l'acier. Plus précisément, elle concerne les divers éléments en matériau réfractaire qui entrent en contact avec le métal liquide dans la lingotière où s'amorce la solidification du produit coulé. Parmi ces éléments, on peut citer en particulier les busettes introduisant le métal liquide dans la lingotière, ainsi que les faces latérales qui, en coulée continue entre cylindres, assurent le confinement du métal liquide entre les surfaces refroidies desdits cylindres.

Une lingotière de coulée continue de l'acier se compose essentiellement de parois métalliques (généralement en cuivre ou alliage de cuivre) énergiquement refroidies intérieurement, délimitant un espace de coulée, et contre lesquelles s'amorce la solidification de l'acier. Mais à l'intérieur de cette lingotière, l'acier liquide est aussi, le plus souvent, au contact d'éléments en matériau réfractaire. Dans la très grande majorité des installations de coulée continue, le métal en fusion est amené dans la lingotière au moyen d'une busette en un matériau tel que de l'alumine graphitée, dont l'extrémité inférieure plonge dans le bain de métal déjà présent dans la lingotière. D'autre part, les machines dites de "coulée entre cylindres", sur lesquelles on coule des bandes d'acier de très faible épaisseur (de l'ordre de quelques mm) en faisant se solidifier l'acier contre les parois de deux cylindres contrarotatifs rapprochés à axes horizontaux, ont leur espace de coulée limité latéralement par deux plaques en matériau réfractaire appliquées contre les faces planes des cylindres. Le ou les matériaux constitutifs de ces plaques peuvent être notamment de la silice, de l'alumine graphitée, ou d'autres matériaux combinant le mieux possible un fort pouvoir isolant, une faible réactivité avec l'acier liquide et une forte résistance à l'abrasion notamment dans les parties des plaques qui sont destinées à frotter contre les cylindres de coulée.

Afin d'éviter qu'ils ne subissent un choc thermique trop important lors de leur premier contact avec le métal liquide qui entraînerait leur destruction, et aussi pour éviter qu'ils ne provoquent un refroidissement excessif du métal, ces éléments réfractaires doivent être fortement préchauffés préalablement à la coulée. Mais ce préchauffage favorise les réactions d'oxydation et peut donc amener une détérioration importante de l'élément, en particulier si le matériau réfractaire utilisé contient du graphite en quantité significative (c'est le cas notamment de l'alumine graphitée). Il n'est donc pas toujours possible d'atteindre une température aussi élevée qu'on le souhaiterait, ou de maintenir cette température aussi longtemps qu'il serait nécessaire (lorsque, par exemple, la coulée doit être retardée alors que le préchauffage a déjà commencé). D'autre part, dans le cas des plaques délimitant latéralement l'espace de coulée d'une coulée entre cylindres (plaques que l'on appellera "faces latérales" dans la suite de la description), il est souhaitable de les enduire d'un lubrifiant solide, au moins sur leurs parties destinées à frotter contre les cylindres, de manière à limiter leur usure mécanique. Ce lubrifiant pourrait avantageusement être du graphite, qui est meilleur marché que, par exemple, le nitrure de bore. Mais une couche de graphite exposée à l'air sur un matériau en cours de préchauffage ou déjà préchauffé serait inévitablement consumée, et cette solution n'est donc pas envisageable.

Pour résoudre le problème de la détérioration des réfractaires graphités durant le préchauffage, il a été proposé dans le document US 5,259,439 de les revêtir avant le préchauffage d'une couche superficielle retardant leur oxydation. Cette couche peut être un vernis céramique à base de silicium, résistant jusqu'à des températures de préchauffage de 1200 à 1500°C. Un tel revêtement est effectivement adapté à la fonction de protection du réfractaire pendant le préchauffage, mais il est consommé dès le début de la coulée sous l'effet de son contact avec le métal. Or, il serait intéressant de disposer d'un revêtement qui puisse protéger plus longtemps les réfractaires contre les dégradations qu'ils subissent au cours même de la coulée, du fait des réactions chimiques et des sollicitations physiques qu'ils subissent au contact de l'acier liquide.

Le but de l'invention est de proposer un revêtement pour éléments en matériau réfractaire de coulée continue des métaux, notamment de l'acier, qui puisse à la fois protéger lesdits éléments et leurs éventuels revêtements contre l'oxydation pendant le préchauffage, et aussi retarder autant que possible la dégradation de ces éléments au cours de la coulée elle-même.

A cet effet, l'invention a pour objet un enduit protecteur tel que défini dans la revendication 1 pour éléments en matériau réfractaire d'une lingotière de coulée continue des métaux, notamment de l'acier, caractérisé en ce qu'il est constitué par une dispersion de particules dans un solvant, lesdites particules comprenant essentiellement du nitrure de bore et au moins un des oxydes métalliques suivants: zircon, zircone, alumine, à l'exclusion de la silice, le nitrure de bore représentant entre 20 et 50% en poids desdites particules.

L'invention a également pour objet un élément en matériau réfractaire d'une lingotière de coulée continue des métaux, notamment de l'acier tel que défini dans la revendication 13, caractérisé en ce qu'il est revêtu d'une couche protectrice résultant de l'application puis du séchage d'un enduit protecteur du type précédent. Cet élément peut être constitué notamment par une busette de coulée ou une face latérale de coulée entre cylindres. Dans ce dernier cas, la couche protectrice peut recouvrir un lubrifiant solide et/ou un matériau dégageant de la chaleur lors de sa fusion et de sa dissolution dans le métal liquide.

Comme on l'aura compris, l'invention consiste à revêtir l'élément réfractaire (busette de coulée ou face latérale de coulée entre cylindres notamment) d'un enduit protecteur constitué pour l'essentiel par un mélange dans un solvant (aqueux ou autre) de nitrure de bore et d'un ou de plusieurs oxydes dont les caractéristiques physico-chimiques sont compatibles avec le contact du métal liquide. Cet enduit est ensuite séché, et la couche protectrice qui en résulte permet d'assurer une bonne protection de l'élément réfractaire (et de son revêtement oxydable éventuel) contre la combustion ou l'oxydation durant le préchauffage. Et pendant la coulée, la présence de nitrure de bore procure à la surface externe de l'élément réfractaire une mouillabilité réduite, ce qui ralentit sensiblement les réactions chimiques entre l'élément et le métal liquide. On augmente ainsi la durée d'utilisation de élément si la couche protectrice est suffisamment épaisse. De plus, cette couche protectrice constitue une barrière isolante qui contribue à limiter la dégradation thermique de l'élément.

L'invention sera mieux comprise à la lecture de la description qui suit, donnée en référence à la planche unique de dessins sur laquelle:
- la figure 1 montre schématiquement en vue de dessus et en coupe selon I-I une lingotière de coulée continue entre cylindres équipée de faces latérales et d'une busette de coulée selon l'invention, telle qu'elle se présente juste avant le début de la coulée, alors que l'installation n'a pas encore reçu d'acier liquide;
- la figure 2a montre la même lingotière vue de dessus et en coupe selon IIa-IIa peu après le début de la coulée;
- la figure 2b montre la même lingotière en cours de coulée, vue de face et en coupe selon IIb-IIb;
- la figure 3 montre schématiquement, vue en perspective, une variante des faces latérales selon l'invention.

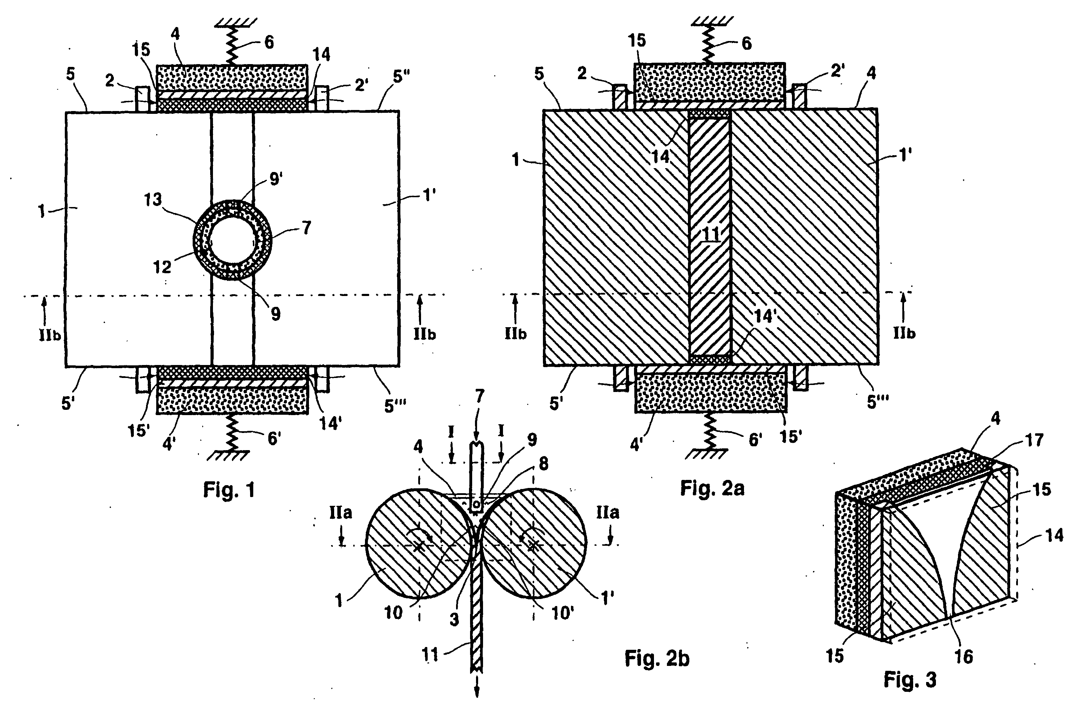

L'installation de coulée entre cylindres de bandes minces en acier représentée sur les figures 1, 2a et 2b comporte, de manière connue, deux cylindres 1, 1' à axes 2, 2' parallèles et horizontaux, énergiquement refroidis intérieurement et pouvant être mis en rotation en sens contraires autour de leurs axes 2, 2' par des moyens classiques non représentés. Ces deux cylindres 1, 1' ont habituellement un diamètre de l'ordre de 600 à 1500 mm et une longueur de l'ordre de 600 à 1500 mm. Leurs génératrices sont éloignées d'une distance minimale correspondant à l'épaisseur de la bande que l'on veut couler, et le niveau 3 correspondant à cette distance minimale est appelé "col". Des faces latérales 4, 4' constituées par un matériau réfractaire isolant unique tel que de la silice, de l'alumine graphitée ou du Sialon®, ou par un assemblage de plusieurs de ces matériaux, sont appliquées contre les chants 5, 5', 5", 5"' des cylindres 1, 1', de manière à obturer latéralement l'espace de coulée défini par les surfaces latérales refroidies des cylindres 1, 1'. Cette application des faces latérales 4, 4' est réalisée grâce à des moyens connus en eux-mêmes et symbolisés par les ressorts 6, 6'. Une busette 7 en matériau réfractaire, connectée à un répartiteur non représenté renfermant l'acier liquide, a pour fonction d'amener l'acier liquide 8 dans l'espace de coulée, et est munie à cet effet d'ouïes 9, 9' orientées chacune vers une des faces latérales 4, 4'. L'acier liquide 8 se solidifie contre les surfaces latérales refroidies des cylindres 1, 1' pour former deux peaux solidifiées 10, 10' qui se rejoignent sensiblement au niveau du col 3 pour former la bande coulée 11 de quelques mm d'épaisseur qui est extraite continûment de la lingotière.

La surface extérieure 12 de la busette 7 est revêtue d'une couche protectrice 13 dont l'épaisseur peut atteindre quelques mm (typiquement 0,5 à 2 mm). Selon l'invention, cette couche protectrice 13 a été réalisée à partir d'un enduit constitué par une dispersion de particules dans un solvant, lesdites particules comprenant essentiellement du nitrure de bore et au moins un des oxydes métalliques suivants: zircon, zircone, alumine, silice, le nitrure de bore représentant entre 20 et 50% en poids desdites particules. Des exemples détaillés de tels enduits avec leurs modes de préparation seront donnés dans la suite de cette description. Après son application sur la busette 7, cet enduit est séché et la busette 7 peut alors être préchauffée en vue de la coulée. La couche protectrice 13 a plusieurs fonctions. La première, comme pour les matériaux déjà connus dans l'art antérieur notamment par le document US 5,259,439, est de protéger de l'oxydation le réfractaire de base formant la busette 7 lors du préchauffage. Cela est particulièrement utile lorsque ce réfractaire contient du graphite, ce qui est le cas de l'alumine graphitée qui est l'un des matériaux les plus couramment utilisés à cet effet. Mais contrairement aux matériaux cités par US 5,259,439, les couches protectrices 13 de l'invention ont une tenue élevée au contact de l'acier liquide 8, et ne sont pas détruites dans les premiers instants de la coulée si leur épaisseur dépasse 0,5 mm environ. Cela leur permet de constituer une barrière thermique entre l'acier liquide 8 et le réfractaire de base de la busette 7, qui fait que celui-ci est moins sévèrement sollicité qu'en l'absence de la couche protectrice 13. Mais également, la présence dans la couche protectrice 13 d'une quantité importante de nitrure de bore procure à cette couche une faible mouillabilité par l'acier liquide, ce qui limite l'importance des réactions chimiques entre le métal liquide 8 et le réfractaire de la busette 7. Il en résulte que la fiabilité de la busette est augmentée, et qu'elle peut être utilisée pendant une plus longue durée de coulée.

Similairement, lors de leur préparation, les faces latérales 4, 4' sont revêtues d'un enduit protecteur selon l'invention. Une fois l'enduit séché, les faces latérales 4, 4' comportent donc une couche protectrice 14, 14' de quelques mm d'épaisseur (typiquement 0,5 à 2 mm). Les faces latérales 4, 4' sont alors montées sur la machine de coulée, préchauffées et finalement appliquées contre les chants 5, 5', 5", 5"' des cylindres 1, 1' par les ressorts 6, 6'. C'est cet état de la machine qui est représenté sur la figure 1. Généralement, avant le remplissage de l'espace de coulée par l'acier liquide 8, les cylindres 1, 1' sont mis en rotation, de manière à provoquer un début d'usure des faces latérales 4, 4' qui permet de les conformer exactement aux chants 5, 5', 5", 5"'. On cherche ainsi à pallier d'éventuelles irrégularités dans les formes et les positionnements relatifs de ces éléments qui pourraient compromettre l'étanchéité de l'espace de coulée. Cette opération provoque une usure au moins partielle des couches protectrices 14, 14' partout où elles frottent contre les cylindres 1, 1', et elles font donc légèrement saillie à l'intérieur de l'espace de coulée. Celui-ci est alors rempli par l'acier liquide 8 et la coulée démarre. C'est cet état de la machine qui est représenté sur les figures 2a et 2b. Au cours du préchauffage des faces latérales 4, 4' et de la coulée, les couches protectrices 14, 14' des faces latérales 4, 4' assurent les mêmes fonctions de protection thermique et chimique du réfractaire de base que la couche protectrice 13 de la busette 7, en particulier si ce réfractaire de base contient du graphite. Avantageusement, comme représenté sur les figures, lors de la préparation des faces latérales 4, 4', on a déposé (par exemple par pulvérisation) sur la surface de leur réfractaire de base, avant l'application de l'enduit protecteur, une mince couche 15, 15' d'un lubrifiant solide tel que du graphite ou du nitrure de bore. L'épaisseur de cette couche de lubrifiant 15, 15' est par exemple de 0, 1 à 0,2 mm. De cette façon, lors de la coulée et après l'usure complète de la couche protectrice 14, 14' dans les zones correspondantes, les contacts entre les faces latérales 4, 4' et les cylindres 1, 1' ont lieu par l'intermédiaire de ce lubrifiant 15, 15'. Comme on l'a dit, l'application de l'enduit protecteur permet de préserver l'intégrité de cette couche de lubrifiant 15, 15' lors du préchauffage des faces latérales 4, 4' lorsque, comme c'est le cas du graphite, il est aisément combustible. L'expérience montre que le graphite ainsi revêtu par la couche protectrice 14, 14' peut supporter sans dommage un préchauffage à 1000°C pendant deux heures.

On peut également apporter aux faces latérales selon l'invention diverses variantes telles que celles que l'on va décrire à présent.

Dans une variante représentée sur la figure 3, la face latérale 4 est revêtue par une succession de couches de différents matériaux disposées dans l'ordre suivant, à partir de la surface qui est destinée à être mise au contact du métal liquide et des cylindres (la représentation est purement schématique et, en particulier, l'échelle des épaisseurs des différentes couches n'est pas respectée).

En premier lieu, on trouve, représentée en pointillés sur la figure 3, une couche protectrice 14 réalisée par application et séchage d'un enduit selon l'invention, destinée comme on l'a dit à protéger la couche suivante contre l'oxygène atmosphérique lors du préchauffage de la face latérale.

En deuxième lieu, on trouve une couche composée de deux parties. Sur les portions de la couche qui sont destinées à frotter contre les cylindres 1, 1' pendant la coulée, on trouve un revêtement lubrifiant solide 15 à base de graphite (par exemple) semblable à celui qui a déjà été décrit. Sur une partie au moins de la portion de la face latérale qui est destinée à entrer au contact du métal liquide, le lubrifiant solide est remplacé par un matériau 16 présentant la propriété d'être exothermique lors de son contact avec le métal liquide tout en supportant les températures atteintes lors du préchauffage des faces latérales. Notamment dans le cas de la coulée d'acier, on peut, par exemple, proposer que ce matériau soit constitué par une feuille d'un alliage fer-aluminium à 70% d'aluminium, qui fond à 1170°C. Le dégagement de chaleur au contact de l'acier liquide sera dû d'une part à la fusion de l'aluminium et d'autre part à sa réaction avec l'oxygène dissous dans l'acier liquide. L'épaisseur de cette feuille est fonction de la quantité de chaleur que l'on désire apporter au métal; elle peut être par exemple de 0,5 mm environ.

En troisième lieu, le matériau lubrifiant 15 et le matériau exothermique 16 sont déposés sur une deuxième couche protectrice 17 réalisée par application et séchage d'un enduit selon l'invention. Cette deuxième couche protectrice 17 doit être pauvre en oxydes aisément réductibles par le matériau exothermique (en particulier, pauvre en silice pour le cas où le matériau exothermique est à base d'aluminium) pour ne pas être exagérément endommagée lors de la fusion du matériau exothermique. Elle est déposée elle-même sur le réfractaire 4 formant la partie fonctionnelle de la face latérale.

Dans cet exemple de face latérale, la couche protectrice superficielle 14 doit être juste assez épaisse pour jouer son rôle de protection lors du préchauffage, de manière à être détruite dès son premier contact avec le métal liquide 8. Après cette destruction rapide, le métal liquide 8 entre donc en contact avec le matériau exothermique 16, dont la fusion et de la dissolution provoquent un réchauffement local du métal liquide 8. On évite ainsi l'apparition de croûtes de métal solidifié sur lesdites faces latérales, notamment dans la partie inférieure de l'espace de coulée. Ces croûtes pourraient gravement perturber le bon déroulement du début de la coulée, et il est important de chercher à éviter leur formation. Simultanément, suite à l'usure de la couche protectrice superficielle 14 lors de la mise en rotation des cylindres 1, 1' avant le début de coulée, le contact entre la face latérale et les cylindres 1, 1' s'effectue par l'intermédiaire de la couche de lubrifiant solide 15. Après la destruction du matériau exothermique 16, le métal liquide vient au contact de la deuxième couche protectrice 17. Ainsi, dans le cas où, comme représenté sur la figure 3, on a conféré à la couche de lubrifiant 15 une épaisseur supérieure à celle du matériau exothermique 16, on se retrouve alors dans la même configuration que celle représentée sur la figure 2a, avec une couche protectrice 17 faisant légèrement saillie à l'intérieur de l'espace de coulée et pouvant protéger assez durablement le réfractaire 4 de la face latérale.

L'exemple qui vient d'être décrit n'est qu'une variante de mise en oeuvre de l'invention, et on peut y apporter des modifications, notamment sur les épaisseurs locales relatives des différentes couches protectrices 14, 17, de lubrifiant solide 15 et de matériau exothermique 16.. En particulier, le matériau exothermique 16 peut ne couvrir qu'une partie de la deuxième couche protectrice 17, et n'être présent que dans les zones où les solidifications parasites sont les plus susceptibles d'apparaître (essentiellement aux voisinages du col 3 et des bords des cylindres 1, 1'). Dans ces conditions, là où le matériau exothermique 16 est absent, les deux couches protectrices 14 et 17 sont au contact l'une de l'autre, et peuvent être équivalentes à une couche unique si elles sont de même nature. D'autre part, la deuxième couche protectrice 17 peut n'être présente qu'au droit de l'espace de coulée; autrement dit le lubrifiant solide 15 peut être appliqué directement sur le réfractaire 4 de la face latérale. Enfin, si on ne juge pas indispensable de protéger le réfractaire 4 après la fusion et la dissolution du matériau exothermique 16, on peut se passer de la deuxième couche protectrice 17.

On va à présent donner une série d'exemples non limitatifs d'enduits protecteurs à base de particules d'oxydes selon l'invention et de leurs méthodes de préparation. Il est entendu que leur point commun essentiel est de comporter en suspension des particules de nitrure de bore qui, si elles représentent 20 à 50% en poids des matériaux secs utilisés pour préparer l'enduit, procurent aux couches protectrices 14, 14', 17 une faible mouillabilité vis-à-vis de l'acier liquide.

### Exemple 1:

On mélange sous agitation dans 150 g d'eau successivement:
- 75 g d'une suspension aqueuse de nitrure de bore hexagonal, commercialisée par la firme ESK sous la dénomination "hBN";
- 75 g d'une suspension aqueuse de nitrure de bore hexagonal contenant 5 à 12% d'alumine-α, commercialisée par la firme CARBORUNDUM sous la dénomination BN COMBAT type E;
- et 150 g d'un enduit à base zircon (ZrSiO₄) à liaison monophosphate d'aluminium Al(H₂PO₄)₃, commercialisé par la firme FOSECO sous la dénomination KORON RL 3190E et contenant environ 50% de ZrO₂, 27% de SiO₂, 14% de P₂O₅ et 4,5% d'Al₂O₃.

La matière sèche correspondant aux divers ingrédients de cette préparation contient au total environ 30% de nitrure de bore. Le revêtement des faces latérales est de préférence effectué par les dépôts de plusieurs couches successives séparés par des étapes de séchage, et se conclut par un étuvage à 120°C. La quantité préparée est suffisante pour recouvrir les deux faces latérales d'une installation de coulée entre cylindres d'une couche d'épaisseur moyenne 0,5-0,7 mm.

### Exemple 2:

On mélange sous agitation dans 75 g d'eau successivement:
- 75 g d'acétate de zirconium contenant 21 à 23% de ZrO₂ + HfO₂ (dont environ 2% de HfO₂) avec un pH de 3 à 4;
- 30 g de nitrure de bore en poudre à 0,3% de B₂O₃ ayant une taille de grains d'environ 3 µm (référence CARBORUNDUM PSSP. 151K);
- 175 g de la suspension de nitrure de bore hexagonal ESK hBN précédemment citée;
- 225 g de l'enduit à base zircon KORON RL3190E précédemment cité;
- 25 g de liant chimique Al(H₂PO₄)₃ à pH = 2,2-2,5 commercialisé par la firme PARKER sous la référence FFB 32;
- et de l'eau en quantité suffisante pour permettre une bonne application de l'enduit, celui-ci étant ensuite étuvé comme dans l'exemple précédent.

Par rapport à l'exemple précédent, la présence de zircone native introduite par l'acétate de zirconium permet d'augmenter la résistance de la couche protectrice à la corrosion, puisque cet enduit est plus pauvre en silice. Cette caractéristique rend la couche protectrice apte à être mise au contact d'un matériau exothermique à base d'aluminium en cours de fusion, et cet enduit peut donc être utilisé pour former la couche protectrice 17 de l'exemple de face latérale décrit précédemment et représenté sur la figure 3. Les exemples d'enduits suivants, qui ne contiennent pas de zircone et peu ou pas de silice, conviennent également à cet usage.

Sur les matières sèches, la composition approximative de la couche protectrice est de 45% de KORON RL 3190E, 15% d'acétate de zirconium, 40% de nitrure de bore et 5% de liant chimique.

D'autres sources de zircone que l'acétate de zirconium peuvent être utilisées, par exemple du chlorure de zirconium ou du nitrate de zirconium.

### Exemple 3:

On mélange sous agitation 9,5 g de nitrure de bore en poudre CARBORUNDUM PSSP.151K à 100 g de l'acétate de zirconium de l'exemple 2, on enduit les faces latérales et on étuve. Dans ces conditions, le revêtement sec se compose en moyenne de 70% de zircone et 30% de nitrure de bore. La teneur élevée en zircone garantit une excellente résistance à la corrosion.

Ici encore, on peut utiliser d'autres sources de zircone que l'acétate de zirconium.

En variante, on peut remplacer quelques % de zircone par de l'oxyde de chrome Cr₂O₃ qui a aussi une action anti-mouillante.

De manière générale, les épaisseurs des couches protectrices ainsi mises en oeuvre dans l'invention peuvent aller de quelques 1/10 mm à quelques mm.

Il est entendu que ces enduits peuvent être appliqués de la même façon sur la busette de coulée, ou sur d'autres éléments réfractaires qui pourraient être au contact de l'acier liquide (ou d'un autre métal dont les propriétés physico-chimiques seraient compatibles avec l'utilisation des couches protectrices obtenues) dans une lingotière de coulée continue.

Avantageusement, on peut également incorporer aux différents enduits qui ont été décrits des fibres céramiques à base de zircone et/ou d'alumine. Ces fibres ont pour fonction d'augmenter la résistance aux chocs thermiques des couches protectrices formées à partir de ces enduits.

## Revendications

1. Enduit protecteur pour éléments en matériau réfractaire d'une lingotière de coulée continue des métaux, notamment de l'acier, **caractérisé en ce qu'**il est constitué par une dispersion de particules dans un solvant, lesdites particules comprenant essentiellement du nitrure de bore et au moins un des oxydes métalliques suivants: zircon, zircone, alumine, à l'exclusion de la silice, le nitrure de bore représentant entre 20 et 50% en poids desdites particules.

2. Enduit protecteur selon la revendication 1, **caractérisé en ce qu'**il est constitué par un mélange aqueux d'un enduit à base de zircon et de particules de nitrure de bore hexagonal.

3. Enduit protecteur selon la revendication 2, **caractérisé en ce que** l'enduit à base de zircon contient également du monophosphate d'aluminium.

4. Enduit protecteur selon la revendication 2 ou 3, **caractérisé en ce qu'**il contient également de l'alumine-α.

5. Enduit protecteur selon la revendication 3, **caractérisé en ce qu'**il contient également une source de zircone telle que de l'acétate de zirconium.

6. Enduit protecteur selon la revendication 1, **caractérisé en ce que** l'oxyde est essentiellement de la zircone introduite sous forme d'acétate de zirconium.

7. Enduit protecteur selon la revendication 6, **caractérisé en ce que** la zircone est introduite sous forme d'acétate de zirconium.

8. Enduit protecteur selon la revendication 6 ou 7, **caractérisé en ce qu'**il comprend également de l'oxyde de chrome.

9. Enduit protecteur selon la revendication 1, **caractérisé en ce que** lesdits oxydes sont essentiellement de l'alumine , et **en ce qu'**il contient également un liant chimique.

10. Enduit protecteur selon la revendication 9, **caractérisé en ce que** ledit liant chimique est un silico-phosphate alcalin.

11. Enduit protecteur selon l'une des revendications 1 à 10, **caractérisé en ce qu'**il comprend également des fibres céramiques à base de zircone et/ou d'alumine

12. Enduit protecteur selon la revendication 1, **caractérisé en ce que** lesdits oxydes métalliques sont choisis parmi le zircon et la zircone.

13. Elément en matériau réfractaire d'une lingotiére de coulée continue des métaux, notamment de l'acier, **caractérisé en ce qu'**il est revêtu d'une couche protectrice (13, 14, 14') résultant de l'application puis du séchage d'un enduit protecteur selon l'une des revendications 1 à 12.

14. Elément en matériau réfractaire selon la revendication 13, **caractérisé en ce qu'**il est constitué par une busette de coulée (7) destinée à amener le métal liquide (8) dans ladite lingotière.

15. Elément en matériau réfractaire selon la revendication 13, **caractérisé en ce qu'**il est constitué par une face latérale (4, 4') d'obturation de l'espace de coulée d'une installation de coulée continue entre cylindres.

16. Elément en matériau réfractaire selon la revendication 15, **caractérisé en ce qu'**il comporte une couche intermédiaire (15, 15') d'un lubrifiant solide oxydable tel que du graphite recouverte par ladite couche protectrice (14, 14').

17. Elément en matériau réfractaire selon la revendication 15 ou 16, **caractérisé en ce qu'**il comporte au droit d'au moins une partie dudit espace de coulée une couche intermédiaire (16) d'un matériau réagissant de manière exothermique au contact du métal liquide (8) et supportant les températures atteintes lors du préchauffage dudit élément, recouverte par ladite couche protectrice (14).

18. Elément en matériau réfractaire selon la revendication 17, **caractérisé en ce que** ledit matériau réagissant de manière exothermique est à base d'aluminium.

19. Elément en matériau réfractaire selon l'une des revendications 16 à 18, **caractérisé en ce qu'**il comporte sous la couche intermédiaire (15) de lubrifiant solide et/ou sous la couche intermédiaire (16) de matériau exothermique une deuxième couche protectrice (17) résultant de l'application et du séchage d'un enduit protecteur selon l'une des revendications 1 à 12.

## Claims

1. Protective coating for elements of refractory material of a continuous casting'mould for metals, in particular steel, **characterised in that** it is constituted, by a dispersion of particles in a solvent, the particles substantially comprising boron nitride and at least one of the following metal oxides: zircon, zirconia, aluminium oxide, excluding silica, boron nitride representing between 20 and 50% by weight of the particles.

2. Protective coating according to claim 1, **characterised in that** it is constituted by an aqueous mixture of a coating based on zircon and particles of hexagonal boron nitride.

3. Protective, coating according to claim 2, **characterised in that** the coating based on zircon also contains aluminium monophosphate.

4. Protective coating according to claim 2 or 3, **characterised in that** it also contains α-aluminium oxide.

5. Protective coating according to claim 3, **characterised in that** it also contains a source of zirconia, such as zirconium acetate.

6. Protective coating according to claim 1, **characterised in that** the oxide is substantially zirconia introduced in the form of zirconium acetate.

7. Protective coating according to claim 6, **characterised in that** the zirconia is introduced in the form of zirconium acetate.

8. Protective coating according to claim 6 or 7, **characterised in that** it also comprises chromium oxide.

9. Protective coating according to claim 1, **characterised in that** the oxides are substantially aluminium oxides, and **in that** the coating also contains a chemical binder.

10. Protective coating according to claim 9, **characterised in that** the chemical binder is an alkaline silicophosphate.

11. protective coating according to any one of claims 1 to 10, **characterised in that** it also comprises ceramic fibres based on zirconia and/or aluminium oxide.

12. Protective coating according to claim 1, **characterised in that** the metal oxides are selected from zircon and zirconia.

13. Element of refractory material of a continuous casting mould for metals, in particular steel, **characterised in that** it is coated with a protective layer (13, 14, 14') which results from a protective coating being applied then dried according to any one of claims 1 to 12.

14. Element of refractory material according to claim 13, **characterised in that** it is constituted by a pouring spout (7) which is intended to introduce the liquid metal (8) into the mould.

15. Element of refractory material according to claim 13, **characterised in that** it is constituted by a lateral face (4, 4') for closing the casting space of a continuous casting installation between cylinders.

16. Element of refractory material according to claim 15, **characterised in that** it comprises an intermediate layer (15, 15') of an oxidisable solid lubricant, such as graphite, which layer (15, 15') is covered by the protective layer (14, 14').

17. Element of refractory material according to claim 15 or 16, **characterised in that** it comprises, in the region of at least a portion of the casting space, an intermediate layer (16) of a material which reacts in an exothermic manner in contact with the liquid metal (8) and which withstands the temperatures reached when the element is pre-heated, which intermediate layer (16) is covered by the protective layer (14).

18. Element of refractory material according to claim 17, **characterised in that** the material which reacts in an exothermic manner is based on aluminium.

19. Element of refractory material according to any one of claims 16 to 18, **characterised in that** it comprises, below the intermediate layer (15) of solid lubricant and/or below the intermediate layer (16) of exothermic material, a second protective layer (17) which results from a protective coating according to any one of claims 1 to 12 being applied and dried.

## Patentansprüche

1. Schutzüberzug für Elemente einer Stranggießkokille aus feuerfestem Material für Metalle, insbesondere Stahl, **dadurch gekennzeichnet, daß** er aus einer Dispersion von Teilchen in einem Lösungsmittel besteht, wobei die Teilchen im wesentlichen Bornitrid und mindestens eines der folgenden Metalloxide umfassen: Zirkon, Zirkoniumoxid, Aluminiumoxid mit Ausnahme von Siliziumoxid, wobei das Bornitrid zwischen 20 und 50 Gew.-% der Teilchen darstellt.

2. Schutzüberzug gemäß Anspruch 1, **dadurch gekennzeichnet, daß** er aus einem wäßrigen Gemisch eines Überzugs auf der Grundlage von Zirkon und Teilchen aus hexagonalem Bornitrid besteht.

3. Schutzüberzug gemäß Anspruch 2, **dadurch gekennzeichnet, daß** der Überzug auf Zirkongrundlage auch Aluminiummonophosphat enthält.

4. Schutzüberzug gemäß Anspruch 2 oder 3, **dadurch gekennzeichnet, daß** er auch α-Aluminiumoxid enthält.

5. Schutzüberzug gemäß Anspruch 3, **dadurch gekennzeichnet, daß** er auch eine Zirkoniumoxidauelle wie etwa Zirkoniumacetat enthält.

6. Schutzüberzug gemäß Anspruch 1, **dadurch gekennzeichnet, daß** das Oxid im wesentlichen in Form von Zirkoniumacetat eingeführtes Zirkoniumoxid ist.

7. Schutzüberzug gemäß Anspruch 6, **dadurch gekennzeichnet, daß** das Zirkoniumoxid in Form von Zirkoniumacetat eingeführt wurde.

8. Schutzüberzug gemäß Anspruch 6 oder 7, **dadurch gekennzeichnet, daß** er auch Chromoxid enthält.

9. Schutzüberzug gemäß Anspruch 1, **dadurch gekennzeichnet, daß** die Oxide im wesentlichen Aluminiumoxid sind und dadurch, daß er auch ein chemisches Bindemittel enthält.

10. Schutzüberzug gemäß Anspruch 9, **dadurch gekennzeichnet, daß** das chemische Bindernittel ein Alkalisiliziumphosphat ist.

11. Schutzüberzug gemäß einem der Ansprüche 1 bis 10, **dadurch gekennzeichnet, daß** er auch Keramikfasern auf der Grundlage von Zirkoniumoxid und/oder Aluminiumoxid enthält.

12. Schutzüberzug gemäß Anspruch 1, **dadurch gekennzeichnet, daß** die Metalloxide aus Zirkon und Zirkoniumoxid ausgewählt sind.

13. Element einer Stranggießkokille aus feuerfestem Material für Metalle, insbesondere Stahl, **dadurch gekennzeichnet, daß** es mit einer Schutzschicht (13, 14, 14') überzogen ist, die sich aus dem Aufbringen und dann dem Trocknen eines Schutzü-berzugs gemäß einem der Ansprüche 1 bis 12 ergibt.

14. Element aus feuerfestem Material gemäß Anspruch 13, **dadurch gekennzeichnet, daß** es aus einem Gießrohr (7) besteht, das zum Einführen des flüssigen Metalls (8) in die Kokille bestimmt ist.

15. Element aus feuerfestem Material gemäß Anspruch 13, **dadurch gekennzeichnet, daß** es aus einer Seitenwand (4, 4') zur Abdichtung des Gießraumes einer Zweirollenstranggießanlage besteht.

16. Element aus feuerfestem Material gemäß Anspruch 15, **dadurch gekennzeichnet, daß** es eine Zwischenschicht (15, 15') aus einem festen, oxidierbaren Schmiermittel wie etwa Graphit umfaßt, die mit der Schutzschicht (14, 14') überzogen ist.

17. Element aus feuerfestem Material gemäß Anspruch 15 oder 16, **dadurch gekennzeichnet, daß** es an mindestens einem Teil des Gießraums eine Zwischenschicht (16) aus einem Material umfaßt, das bei Berührung mit dem flüssigen Metall (8) exotherm reagiert und den beim Vorerhitzen des mit der Schutzschicht (14) überzogenen Elements erreichten Temperaturen standhält.

18. Element aus feuerfestern Material gemäß Anspruch 17, **dadurch gekennzeichnet, daß** das exotherm reagierende Material Aluminium ist.

19. Element aus feuerfestem Material gemäß einem der Ansprüche 16 bis 18, **dadurch gekennzeichnet, daß** es unter der Zwischenschicht (15) aus festem Schmiermittel und/oder unter der Zwischenschicht (16) aus exothermem Material eine zweite Schutzschicht (17) umfaßt, die Zum Aufbringen und zum Trocknen einer Schutzschicht gemäß einem der Ansprüche 1 bis 12 führt.
